# EUROPEAN PATENT APPLICATION

(11) **EP 4 842 045 A1**
(43) Date of publication of application: **18.11.2026**
(21) Application number: 24915955.9
(22) Date of filing: 09.01.2024
(51) Int. Cl.: H04W 24/10

(54) **DATA PROCESSING METHOD, DEVICE, SYSTEM, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2024/071465
(87) International publication number: WO 2025/147874

(57) **Abstract**

Embodiments of the present disclosure relate to the technical field of communications, and disclose a data processing method, a device, and a computer readable storage medium. The data processing method comprises: a terminal in a connected state collects and stores data; and, on the basis of the state of the terminal, determines whether to delete stored data. According to the embodiments of the present disclosure, it is determined, on the basis of the state of the terminal, whether stored data is deleted, and data collected and stored by a UE can be reasonably processed.

## Description

### TECHNICAL FIELD

The present disclosure relates to the field of communication technologies, in particular, to a method for data processing, a device, a system, and a storage medium.

### BACKGROUND

Currently, a machine learning algorithm is one of the most important implementations of an artificial intelligence (AI) technology. A wireless communication network may use the AI for prediction and inference, to improve system performance.

### SUMMARY

Embodiments of the present disclosure provide a method for data processing, a device, a system, and a storage medium.

According to a first aspect of embodiments of the present disclosure, a method for data processing is provided. The method is performed by a terminal, and the method includes:
collecting and storing data by the terminal in a connected state; and
determining, based on a state of the terminal, whether to delete stored data.

According to a second aspect of embodiments of the present disclosure, a method for data processing is provided. The method is performed by a network device, and the method includes:
sending a first message to a terminal, where the first message carries configuration information, the configuration information includes information indicating whether the terminal leaving a connected state deletes stored data, and the stored data is data collected and stored by the terminal in the connected state.

According to a third aspect of embodiments of the present disclosure, a terminal is provided. The terminal includes:
a first processing module, configured to collect and store data by the terminal in a connected state, and determine, based on a state of the terminal, whether to delete stored data.

According to a fourth aspect of embodiments of the present disclosure, a network device is provided. The network device includes:
a second transceiver module, configured to send a first message to a terminal, where the first message carries configuration information, and the configuration information includes information indicating whether the terminal leaving the connected state deletes stored data, and the stored data is data collected and stored by the terminal in a connected state.

According to a fifth aspect of embodiments of the present disclosure, a terminal is provided. The terminal includes:
one or more processors.

The terminal is configured to perform optional implementations of the first aspect.

According to a sixth aspect of embodiments of the present disclosure, a network device is provided. The network device includes:
one or more processors.

The network device is configured to perform optional implementations of the second aspect.

According to a seventh aspect of embodiments of the present disclosure, a communication system is provided. The system includes a terminal and a network device, where the terminal is configured to implement the method described in optional implementations of the first aspect, and the network device is configured to implement the method described in optional implementations of the second aspect.

According to an eighth aspect of embodiments of the present disclosure, a computer-readable storage medium is provided. Executable instructions are stored in the computer-readable storage medium, and the executable instructions are loaded and executed by a processor to implement the method described in optional implementations of the first aspect or the second aspect.

It is to be understood that both the foregoing general descriptions and the following detailed descriptions are exemplary and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and, together with the description, serve to explain the principles of the present disclosure.
FIG. 1 is a schematic structural diagram of a wireless communication system according to an example embodiment.
FIG. 2 is a flowchart of a method for data processing according to an example embodiment.
FIG. 3a is a schematic flowchart of a method for data processing according to an embodiment of the present disclosure.
FIG. 3b is a schematic flowchart of a method for data processing according to an embodiment of the present disclosure.
FIG. 3c is a schematic flowchart of a method for data processing according to an embodiment of the present disclosure.
FIG. 4 is a schematic flowchart of a method for data processing according to an embodiment of the present disclosure.
FIG. 5a is a schematic structural diagram of a terminal according to an embodiment of the present disclosure.
FIG. 5b is a schematic structural diagram of a network device according to an embodiment of the present disclosure.
FIG. 6a is a schematic structural diagram of a communication device according to an embodiment of the present disclosure.
FIG. 6b is a schematic structural diagram of a chip according to an embodiment of the present disclosure.

### DETAILED DESCRIPTION

Embodiments of the present disclosure provide a method for data processing, a device, a communication system, and a storage medium.

According to a first aspect, embodiments of the present disclosure provide a method for data processing. The method is performed by a terminal, and the method includes:
collecting and storing data by a terminal in a connected state; and
determining, based on a state of the terminal, whether to delete stored data.

In the foregoing embodiments, by determining, based on the state of the terminal, whether to delete the stored data, the data collected and stored by the UE may be reasonably processed.

With reference to some embodiments of the first aspect, in some embodiments, determining, based on the state of the terminal, whether to delete the stored data includes:
in response to the terminal leaving the connected state, determining, according to configuration information, whether to delete the stored data.

In the foregoing embodiments, when the terminal leaves the connected state, it is determined, according to the configuration information, whether to delete the stored data, so that the processing of the data collected and stored by the UE may better meet a system requirement.

With reference to some embodiments of the first aspect, in some embodiments, the method further includes:
in response to determining to continue saving the stored data, deleting the stored data after a first duration.

In the foregoing embodiments, when the terminal leaves the connected state, if it is determined, based on the configuration information, to continue saving the stored data, the data may be deleted after the data continues to be stored for more than the preset set duration, and the data may be effectively updated, so that an AI model may be subsequently trained based on the data to obtain a better performance model, and it may also avoid occupying a storage space of the terminal for a long time.

With reference to some embodiments of the first aspect, in some embodiments, the method further includes:
receiving a second message sent by the network device, where the second message carries first indication information indicating that the duration of the first timer is a second duration; and
restarting the first timer based on the first indication information.

In the foregoing embodiments, the timer is restarted based on the second duration configured by the network side, so that the network may control whether the terminal continues to store data, to avoid occupying the storage space of the terminal, and may further prevent the terminal from deleting the stored data in advance.

With reference to some embodiments of the first aspect, in some embodiments, the method further includes:
stopping a running first timer, in response to the state of the terminal changing.

In the foregoing embodiments, when the state of the terminal changes (for example, entering an idle state or re-entering the connected state), the running of the timer may be stopped, so as to subsequently perform reasonable processing on the data.

With reference to some embodiments of the first aspect, in some embodiments, determining, based on the state of the terminal, whether to delete the stored data includes:
in response to occurring a connection failure at the terminal, determining to delete the stored data.

In the foregoing embodiments, when the connection failure occurs at the terminal, the terminal deletes the stored data, thereby avoiding occupying the storage space of the terminal.

With reference to some embodiments of the first aspect, in some embodiments, the stored data is not reported to the network device.

With reference to some embodiments of the first aspect, in some embodiments, the method further includes:
in response to the terminal entering the connected state and the stored data existing, sending second indication information to the network device, where the second indication information indicates that the stored data exists.

In the foregoing embodiments, when the terminal enters the connected state to re-enter the connected state, if there is stored data on the terminal, the terminal notifies the network, so that the network quickly obtains required data and effectively reduces a delay.

With reference to some embodiments of the first aspect, in some embodiments, the method further includes:
receiving third indication information sent by the network device, where the third indication information is used to instruct the terminal to report the stored data; and
sending the stored data to the network device based on the third indication information.

In the foregoing embodiments, the stored data may be reported to the network based on the indication of the network, so that data meeting a requirement of the network may be reported, and power consumption of the UE may be reduced.

With reference to some embodiments of the first aspect, in some embodiments, the third indication information indicates at least one of a first application condition or a first application scenario corresponding to data reported by the terminal, and
sending the stored data to the network device based on the third indication information includes:
sending first data in the stored data to the network device, where the first data corresponds to at least one of the first application condition or the first application scenario.

In the foregoing embodiments, the corresponding data is reported on the basis of the application condition and/or the application scenario indicated by the network, so that subsequent training of an AI model based on the data may better meet a performance requirement of the network.

With reference to some embodiments of the first aspect, in some embodiments, the method further includes:
receiving fourth indication information sent by the network device, where the fourth indication information is used to instruct the terminal to delete the stored data; and
deleting the stored data based on the fourth indication information.

In the foregoing embodiments, the stored data is deleted on the basis of the network indication, so that data reported to the network may better meet a requirement of the network.

With reference to some embodiments of the first aspect, in some embodiments, the second indication information further indicates at least one of a second application condition or a second application scenario corresponding to the stored data.

In the foregoing embodiments, when data is reported to the network, an application condition and/or a scenario corresponding to the reported data may be further indicated, to facilitate subsequent AI model training on the network.

With reference to some embodiments of the first aspect, in some embodiments, the method further includes:
sending fifth indication information to the network device, where the fifth indication information indicates at least one of a second application condition or a second application scenario corresponding to the stored data.

In the foregoing embodiments, when data is reported to the network, an application condition and/or a scenario corresponding to the reported data may be further indicated, to facilitate subsequent AI model training on the network.

According to a second aspect, embodiments of the present disclosure provide a method for data processing. The method is performed by a network device, and the method includes:
sending a first message to a terminal, where the first message carries configuration information, the configuration information includes information indicating whether the terminal leaving a connected state deletes stored data, and
the stored data is data collected and stored by the terminal in the connected state.

With reference to some embodiments of the second aspect, in some embodiments, the configuration information further includes information about a first duration of a first timer.

With reference to some embodiments of the second aspect, in some embodiments, in response to the configuration information including information indicating that the terminal leaving the connected state continues to save the stored data, the method further includes:
sending a second message to the terminal, where the second message carries first indication information, and the first indication information indicates that a duration of the first timer is a second duration.

With reference to some embodiments of the second aspect, in some embodiments, the stored data is not sent to the network device.

With reference to some embodiments of the second aspect, in some embodiments, in response to the terminal entering the connected state and the stored data existing, the method further includes:
receiving second indication information sent by the terminal, where the second indication information indicates that the stored data exists.

With reference to some embodiments of the second aspect, in some embodiments, the method further includes:
sending third indication information to the terminal, where the third indication information is used to instruct the terminal to report the stored data; and
receiving the stored data sent by the terminal.

With reference to some embodiments of the second aspect, in some embodiments, the third indication information indicates at least one of a first application condition or a first application scenario corresponding to data reported by the terminal, and
first data in the stored data sent by the terminal is received, where the first data corresponds to at least one of the first application condition or the first application scenario.

With reference to some embodiments of the second aspect, in some embodiments, the method further includes:
sending fourth indication information to the terminal, where the fourth indication information is used to instruct the terminal to delete the stored data.

With reference to some embodiments of the second aspect, in some embodiments, the second indication information further indicates at least one of a second application condition or a second application scenario corresponding to the stored data.

With reference to some embodiments of the second aspect, in some embodiments, the method further includes:
receiving fifth indication information sent by the terminal, where the fifth indication information indicates at least one of a second application condition or a second application scenario corresponding to the stored data.

According to a third aspect, embodiments of the present disclosure provide a terminal. The terminal includes:
a first processing module, configured to collect and store data by the terminal in a connected terminal, and determine, based on a state of the terminal, whether to delete stored data.

According to a fourth aspect, embodiments of the present disclosure provide a network device. The network device includes:
a second transceiver module, configured to send a first message to a terminal, where the first message carries configuration information, and the configuration information includes information indicating whether the terminal leaving a connected state deletes stored data, and
the stored data is data collected and stored by the terminal in a connected state.

According to a fifth aspect, embodiment of the present disclosure provide a terminal. The terminal includes:
one or more processors;
where the terminal is configured to perform the method described in optional implementations of the first aspect.

According to a sixth aspect, embodiments of the present disclosure provide a network device. The network device includes:
one or more processors;
where the network device is configured to perform the method described in optional implementations of the second aspect.

According to a seventh aspect, embodiments of the present disclosure provide a communication system. The system includes a terminal and a network device, where the terminal is configured to implement the method described in optional implementations of the first aspect, and the network device is configured to implement the method described in optional implementations of the second aspect.

According to an eighth aspect, embodiments of the present disclosure provide a storage medium. The storage medium stores instructions, and when the instructions are run on a communication device, the communication device is caused to perform the method described in optional implementations of the first aspect or the second aspect.

According to a ninth aspect, embodiments of the present disclosure provide a program product. When the program product is executed by a communication device, the communication device is caused to perform the method described in optional implementations of the first aspect or the second aspect.

According to a tenth aspect, embodiments of the present disclosure provide a computer program. When the computer program is run on a computer, the computer is caused to perform the method described in optional implementations of the first aspect or the second aspect.

According to an eleventh aspect, embodiments of the present disclosure provide a chip or a chip system, where the chip or chip system includes a processing circuit, configured to perform the method described in optional implementations of the first aspect or the second aspect.

It may be understood that the foregoing apparatus for data processing, the communication device, the communication system, the storage medium, the program product, and the computer program are all configured to perform the methods provided in embodiments of the present disclosure. Therefore, for beneficial effects that may be achieved, reference may be made to the beneficial effects in the corresponding methods, and details are not described here again. The communication device may be a terminal or a network device.

Embodiments of the present disclosure provide a method for data processing and apparatus, a communication device, a communication system, and a storage medium. In some embodiments, terms such as a method for data processing, a method for information processing, a method for random access and other terms may be replaced with each other, and terms such as an apparatus for random access, an information processing apparatus, and a communication apparatus may be replaced with each other, and terms such as an information processing system and a communication system may be replaced with each other.

The embodiments of the present disclosure are not exhaustive, and are merely illustrative of some embodiments and are not intended to limit the protection scope of the embodiments of the present disclosure. In the case of no contradiction, each step in an embodiment may be implemented as an independent embodiment, and the steps may be arbitrarily combined. For example, the solution after some steps are removed in an embodiment may also be implemented as an independent embodiment, and the order of steps in an embodiment may be exchanged arbitrarily. In addition, optional implementations in an embodiment may be arbitrarily combined. Furthermore, any combination of the embodiments may be arbitrarily combined, for example, some or all of the steps of different embodiments may be arbitrarily combined, and some embodiments may be arbitrarily combined with optional implementations of other embodiments.

In embodiments of the present disclosure, if there is no special description and a logical conflict, terms and/or descriptions of embodiments have consistency, and may be referred to each other, and technical features in different embodiments may be combined according to an internal logical relationship thereof to form a new embodiment.

Terms used in embodiments of the present disclosure are only for the purpose of describing specific embodiments, and are not intended to limit the embodiments of the present disclosure.

In embodiments of the present disclosure, unless otherwise specified, elements represented in a singular form, such as "a", "an", "the", "above", "said", "preceding", "this", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments, descriptions, such as "at least one of A, B, or C", "A, B, and/or C", include cases of any one of A, B, or C existing alone, and also include cases of any combination of two or more of A, B, or C, where each case may exit alone. For example, "at least one of A, B, or C" includes A alone, B alone, C alone, a combination of A and B, a combination of A and C, a combination of B and C, and a combination of A, B, and C. For example, "A and/or B" include cases of A alone, B alone, a combination of A and B.

In some embodiments, expressions "A in one case and B in another", "in response to one case A and in response to another case B" may include the following technical solutions depending on a situation: A is executed regardless of B, i.e., in some embodiments A; B is executed regardless of A, i.e., in some embodiments B; A and B are selectively executed, i.e., in some embodiments, execution is selected from A and B; both A and B are executed, i.e., in some embodiments A and B. The same applies when there are more branches such as A, B, and C.

Prefix words such as "first" and "second" in embodiments of the present disclosure are only for distinguishing different description objects, and do not constitute restrictions on the position, order, priority, quantity, content, etc. of the description objects. For statements of the description objects, reference may be made to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining that", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus, the device, and the like may be interpreted as physical or virtual, and their names are not limited to those described in embodiments. Terms such as "apparatus", "equipment", "device", "circuit", "network element", "node", "function", "unit", "section", "system", "network", "chip", "chip system", "entity", "body" and the like may be replaced with each other.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be replaced with each other.

In some embodiments, the access network device, the core network device, or the network device may be replaced with the terminal. For example, each embodiment of the present disclosure may be applied to a configuration in which communication between the access network device, the core network device, or the network device and the terminal is replaced with communication between multiple terminals (for example, it may also be referred to as a device-to-device (D2D), a vehicle-to-everything (V2X), or the like). In this case, the terminal may have all or a part of the functions of the access network device. Further, terms such as "uplink" and "downlink" may be replaced with terms corresponding to communication between terminals (for example, "side").

For example, an uplink channel, a downlink channel, or the like, may be replaced with a sidelink channel, and an uplink, a downlink, or the like, may be replaced with a sidelink.

In some embodiments, terms such as "uplink", "up-link", and "physical uplink" may be replaced with each other, terms such as "downlink", "down-link", and "physical downlink" may be replaced with each other, and terms such as "side", "sidelink", "side communication", "sidelink communication", "direct connection", "direct link", "direct communication", and "direct link communication" may be replaced with each other.

In some embodiments, terms such as "downlink control information (DCI)", "downlink (DL) assignment", "DL DCI", "uplink (UL) grant", and "UL DCI" may be replaced with each other.

In some embodiments, terms such as "physical downlink shared channel (PDSCH)" and "DL data" may be replaced with each other, and terms such as "physical uplink shared channel (PUSCH)" and "UL data" may be replaced with each other.

In some embodiments, determination or judgment may be performed by using a value (0 or 1) represented by 1 bit, or may be performed by using a true or false value (Boolean value) represented by true or false, or may be performed by a value comparison (for example, compared with a predetermined value), but is not limited thereto.

In some embodiments, the "network" may be interpreted as an apparatus (for example, an access network device, a core network device, etc.) included in the network.

In some embodiments, obtaining data, information and the like may comply with laws and regulations of the country where it is located.

In some embodiments, data, information and the like may be obtained after obtaining the user's consent.

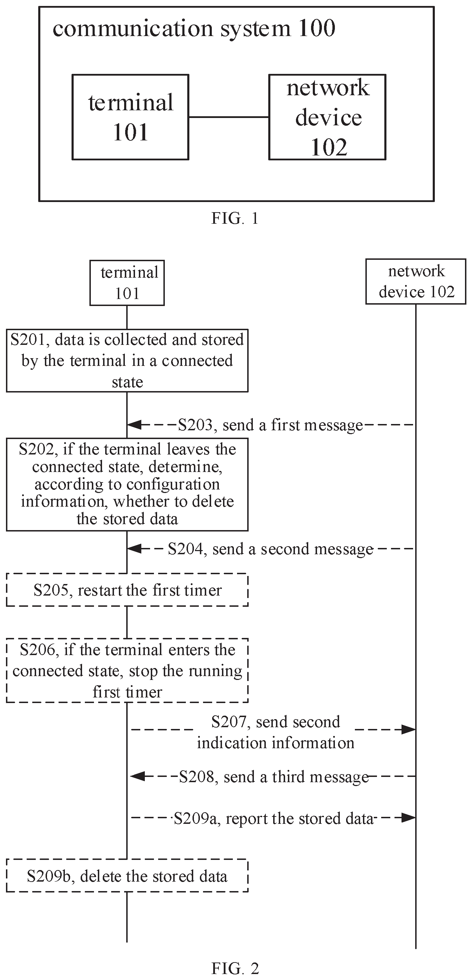

FIG. 1 is a schematic architectural diagram of a communication system according to an embodiment of the present disclosure. As shown in FIG. 1, the communication system 100 comprises a terminal 101 and a network device 102.

In some embodiments, the terminal 101 includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the network device 102 may include at least one of an access network device or a core network device.

In some embodiments, the access network device is, for example, a node or device that accesses a terminal to a wireless network, and the access network device may include at least one of an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure.

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited thereto.

In some embodiments, the access network device may be a device, or may be a plurality of devices or device groups, and each includes all or part of a first network element, a second network element, or the like. A network element may be virtual or may be an entity. For example, the network device includes at least one of an evolved packet core (EPC), a 5G core network (5G Core Network, 5 GCN), or a next generation core (NGC).

In some embodiments, the core network device may be a device, including one or more network elements, or may be a plurality of devices or device groups, and each includes all or part of the foregoing one or more network elements. A network element may be virtual or may be an entity. The core network includes, for example, at least one of an evolved packet core (EPC), a 5G core network (5G Core Network, 5 GCN), and a next generation core (NGC).

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the subjects, which is not limited in embodiments of the present disclosure. Each subject shown in FIG. 1 is an example, and the communication system may include all or some of the subjects shown in FIG. 1, or other subjects other than those shown in FIG. 1, the number and form of the subjects are arbitrary, the connection relationship between the subjects is an example, and the subjects may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

First, related art for the present disclosure is described as follows.

Currently, a machine learning algorithm is one of the most important implementations of an artificial intelligence (AI) technology. The machine learning may obtain a model through a large amount of training data, and an event may be predicted by using a model. In various fields, the model obtained by machine learning training may obtain a very accurate prediction result.

The wireless communication network may use AI for prediction and inference, to improve system performance.

In a beam management procedure, a UE may reduce a quantity of measured beams, and the UE or a base station performs beam prediction by using the AI model to obtain an optimal beam. The beam prediction includes spatial domain beam prediction and time domain beam prediction. In the spatial domain beam prediction, the UE measures a small quantity of beams and predicts measurement results of other beams. In time domain beam prediction, the UE predicts a future beam measurement result based on a historical beam measurement result.

In a channel state information (CSI) reporting procedure, the UE may compress a CSI measurement result through the AI model, report the compressed CSI measurement result to the base station, and then base station restores the original CSI measurement result through the AI model after receiving, thereby reducing the number of signaling bits required in the reporting procedure. The base station may also predict future CSI based on a historical CSI measurement result reported by the UE.

In a positioning procedure, the UE may predict an accurate position according to a limited measurement result.

In a mobility procedure, the UE may predict a handover target cell or a mobility event.

If training of the AI model is located on the network, the UE is required to report collected data to the network. In order to avoid frequent reporting of collected data, the UE may locally store data collected for a plurality of times, and report all stored data to the network in one report.

In the beam management, data for model training may include a beam measurement result, a beam identifier, the strongest K beam measurement results and beam identifiers, and an obtaining time of the beam measurement result. The measured beam may be configured by the network.

In the CSI compression, data for model training may include a CSI measurement result and an obtaining time of the CSI measurement result.

In the positioning, data for model training may include a channel impulse response measurement result, location information of the UE, and a positioning reference signal (PRS) measurement result.

In mobility management, data for model training may include a measurement result of a serving cell, a measurement result of a target cell, and the like.

An AI functionality is a set of AI models, and may be used for a specific function.

The AI model or function may achieve better performance under a specific application condition, and the application condition may be divided into a network side condition and a UE side condition.

The UE collects and reports data for AI training in a connected state, but when the UE leaves the connected state or is in a connected failure state, how to process the collected data is not explicitly specified.

Therefore, according to solutions provided in embodiments of the present disclosure, a method for data processing is provided, so that the UE determines, based on its own state, whether to delete data collected and stored, so that data collected and stored by the UE may be reasonably processed.

Based on the above wireless communication system, various embodiments of the communication method proposed in the present disclosure are described in detail below.

FIG. 2 is a schematic interaction diagram of a method for data processing according to an embodiment of the present disclosure. As shown in FIG. 2, the method for data processing is used for the communication system 100, and the method includes the following steps.

S201, data is collected and stored by the terminal 101 in a connected state.

Optionally, the terminal in the connected state may also be referred to as the terminal in an active state.

In some embodiments, the data is used for training or performance monitoring of an AI model.

In some embodiments, the terminal may collect and store data when a first condition is met.

In some embodiments, the first condition may include that a performance of a currently activated AI model meets a second condition.

Optionally, if the performance of the currently activated AI model meets the second condition, the data is collected and stored.

In some embodiments, the performance of the AI model meeting the second condition includes at least one of:
an accuracy rate output by the AI model meets a first predefined value; or
a difference between an output value of the AI model and a real value meets a second predefined value.

Optionally, when the accuracy rate of the AI model output is less than the first predefined value, or the accuracy rate of the AI model output is greater than the first predefined value, or the accuracy rate of the AI model output is equal to the first predefined value, the performance of the AI model meets the second condition.

Optionally, when the difference between the output value of the AI model and the real value is less than the second predefined value, or the difference between the output value of the AI model and the real value is greater than the second predefined value, or the difference between the output value of the AI model and the real value is equal to the second predefined value, the performance of the AI model meets the second condition.

In some embodiments, at least one of the first predefined value or the second predefined value may be preconfigured, or may be acquired from a protocol, which is not limited in embodiments of the present disclosure.

In some embodiments, the first condition may include a change of an application condition.

Optionally, if the application condition changes, the data is collected and stored.

In some embodiments, the application condition includes an application condition configured by the network device.

In some embodiments, the application condition may include at least one of a condition related to the network device or a condition related to the terminal.

Optionally, the condition related to the network device may also be described as a network-side condition, and the condition related to the terminal may also be described as a UE-side condition.

Optionally, an application condition configured by the network includes: a network-side condition and/or a UE-side condition.

In some embodiments, the UE-side condition may include at least one of a speed, an electric quantity, a running power, a computing capability, a location, a service type, an antenna configuration, or a rotation speed of the UE.

Optionally, the computing capability of the UE may include floating-point operations per second (FLOPs), but is not limited thereto.

Optionally, the location of the UE may be a geographic location, or may be a location of the UE in the cell, but is not limited thereto.

Optionally, the service type of the UE may be at least one of audio, video, multimedia, voice, or the like, but is not limited thereto.

Optionally, the antenna configuration of the UE includes a quantity of ports, but is not limited thereto.

In some embodiments, the network-side condition may include at least one of a cell type, a network deployment scenario, a radio channel quality, a frequency at which a cell is located, a location of a cell, a distance between base stations, an antenna configuration, a transmit power, or a subcarrier spacing (Numerology).

Optionally, the cell type may include a macro cell, a micro cell, a dense urban cell, or the like, but is not limited thereto.

Optionally, the network deployment scenario includes indoor and outdoor.

Optionally, the radio channel quality may be determined by any one of Reference Signal Received Power (RSRP), Reference Signal Received Quality (RSRQ), or a Signal to Interference plus Noise Ratio (SINR).

Optionally, the antenna configuration may include a number of ports, a Multiple-Input Multiple-Output (MIMO) layer number.

In some embodiments, the change of the application condition includes:
a change of the application condition from meeting to not meeting; or
a change of the application condition from not meeting to meeting.

For example, assuming that the application condition is the UE-side condition, for example, when the electric quantity is 60%, the change of the application condition may include: the electric quantity of the UE changes from less than 60% (for example, 20%) to 60% or more, or changes from 60% to less than 60% (for example, 59%).

For example, if the electric quantity of the UE changes from 20% to 60%, or changes from 60% to 59%, the data is collected and stored.

In some embodiments, the application condition includes an application condition corresponding to a currently running AI model.

Optionally, there is a correspondence relationship between the AI model and the application condition, or may be understood as that there is a binding relationship or a mapping relationship between the AI model and the application condition.

Optionally, the AI model may bind at least one application condition.

For example, an application condition bound to the AI model 1 includes at least one of a speed, an electric quantity, a running power, a location, a service type of the UE, a network deployment scenario, a radio channel quality, or a frequency in which the cell is located.

Optionally, when the application condition bound to the AI model changes, data is collected and stored.

In some embodiments, when there are a plurality of application conditions bound to the AI model, if at least one of the plurality of application conditions changes, the UE is triggered to collect data.

Optionally, when one of the plurality of application conditions bound to the AI model changes, the UE is triggered to collect data.

Optionally, when all of the plurality of application conditions bound to the AI model change, the UE is triggered to collect data.

In some embodiments, the terminal may store the application condition for collecting data.

In some embodiments, the terminal may store an application scenario for collecting data.

In some embodiments, the application scenario includes at least one of:
beam management;
compression of channel state information;
positioning of a terminal;
handover of the terminal; or
mobility management of the terminal.

Optionally, when the terminal collects and stores data, an application condition and/or an application scenario for collecting the data may also be stored.

For example, if the first condition is that an electric quantity of the UE changes from 20% to 60%, or is changed from 60% to 59%, the data is collected and stored, and the application condition for collecting the data is: the electric quantity of the UE being 60%. When collecting and storing the data, the terminal may also store the application condition that the electric quantity of the UE being 60%.

S202, if the terminal 101 leaves the connected state, it is determined, according to configuration information, whether to delete the stored data.

Optionally, the terminal leaving the connected state may also be referred to as a terminal in an inactive state.

In some embodiments, the configuration information may be specified by a protocol. For example, when the configuration information configures the UE to delete the stored data when leaving the connected state, the terminal deletes the stored data when leaving the connected state based on the configuration.

In some embodiments, the configuration information may be configured by the network.

In some embodiments, before step S202, the method may further include:

S203, the network device 102 sends a first message to the terminal 101, where the first message carries the configuration information.

Optionally, the configuration information may include information indicating whether the terminal leaving the connected state deletes the stored data.

For example, the network configures 1-bit indication information in the configuration information, and if an indicated value of the indication information is "1", it means deletion, otherwise, continuing to save. If the indication information received by the terminal indicates deletion, the terminal deletes the stored data; and if the indication information received by the terminal indicates saving, the terminal continues to save the stored data.

Optionally, the first message may be a system message or a radio resource control (RRC) message.

In some embodiments, a name of information and the like are not limited to the name described in the embodiments. Terms such as "information", "message", "signal", "signaling", "report", "configuration", "indication", "instruction", "command", "channel", "parameter", "domain", "field", "symbol", "data" and the like in the embodiments may be replaced with each other.

In some embodiments, terms such as "sending", "transmitting", "reporting", "issuing", "transmission", "bidirectional transmission", "sending and/or receiving", and the like may be replaced with each other.

In some embodiments, the method may further include the following steps.

S200 (not shown in the figure), if it is determined to continue saving the stored data, the stored data is deleted after a first duration.

In some embodiments, the first duration may be implemented by a timer (for example, a first timer).

Optionally, if it is determined to continue saving the stored data, the timer may be started, and when the timer expires, the stored data is deleted. The duration of the timer is configured by the network.

Optionally, the timer may be started when the UE leaves the connected state, or may be started when a configuration of the network is received.

In some embodiments, the first duration is a duration of a first timer configured by the network device.

In some embodiments, the configuration information may further include information of the first duration of the first timer.

In some embodiments, terms such as "duration", "period", "time window", "window", and "time" may be replaced with each other.

In some embodiments, the method may further include:

S204, the network device 102 sends a second message to the terminal 101.

In some embodiments, the second message carries first indication information, to indicate that the duration of the first timer is a second duration.

In some embodiments, the second message may be an RRC release message in an RRC recovery procedure.

Optionally, for the UE in the inactive state, during an RRC resume procedure, the network may send an RRC release message to the UE, where a duration of an updated timer is carried (for example, the second duration).

S205, the terminal 101 restarts the first timer based on the received first indication information.

S206, if the state of the terminal 101 changes, the running first timer is stopped.

In some embodiments, step 206 may also be performed after step S200.

In some embodiments, a change of the state of the terminal includes: the terminal entering an idle state, or entering a connected state.

Optionally, when the UE leaving the connected state enters an idle state, if the first timer is running, the first timer is stopped.

Optionally, when the UE leaving the connected state re-enters the connected state, if the first timer is running, the first timer is stopped.

The stored data in the foregoing embodiments is not reported to the network device 102

S207, if the terminal enters the connected state and the stored data exists, the terminal sends second indication information to the network device.

Optionally, the second indication information indicates that the stored data exists.

In some embodiments, the second indication information may be carried by a message such as an RRC setup complete message, an RRC resume complete message, or UE assistance information, but is not limited thereto.

In some embodiments, the second indication information further indicates at least one of a second application condition or a second application scenario corresponding to the stored data.

Optionally, the second application condition and/or the second application scenario corresponding to the stored data may include an application condition and/or a scenario when data is collected.

Optionally, for a specific content of the application condition and the application scenario, reference may be made to the related description in S201, and details are not described here again.

S208, the terminal 101 receives a third message sent by the network device 102.

In some embodiments, the third message may carry third indication information for instructing the terminal to report the stored data.

Optionally, the third message may be an RRC reconfiguration message, but is not limited thereto.

In some embodiments, the third message may carry fourth indication information for instructing the terminal to delete the stored data.

S209a, the terminal 101 reports the stored data to the network device 102.

In some embodiments, the terminal entering the connected state may periodically report the stored data to the network device.

In some embodiments, a period of reporting data of the terminal may be preconfigured, or may be acquired from a protocol, which is not limited in embodiments of the present disclosure.

In some embodiments, the terminal reports the stored data to the network device based on the third indication information.

Optionally, when the terminal receives the third indication information sent by the network, the terminal reports the stored data to the network device.

In some embodiments, the third indication information may further include a first application condition and/or a first application scenario corresponding to data that is required to be reported by the terminal.

Optionally, for a specific content of the application condition and the application scenario, reference may be made to the related description in S201, and details are not described here again.

Optionally, when the terminal reports data to the network device, the terminal may further send an application condition and/or an application scenario corresponding to the reported data to the network device.

For example, data not reported by the terminal to the network includes data 1, 2, and 3, where application condition 1 corresponds to data 1, application condition 2 and application scenario 1 correspond to data 2, and application scenario 2 corresponds to data 3, and if the network indicates to report data corresponds to application condition 2 and application scenario 1, the terminal reports data 2 to the network.

In some embodiments, the terminal sends first data in the stored data to the network device, where the first data corresponds to at least one of the first application condition or the first application scenario.

Optionally, the network may instruct the terminal to report data for a specific application condition and/or a specific application scenario.

For example, the network instructs the terminal to report data corresponding to application scenario 1, and the terminal reports data 1 to the network according to the instruction, where an application scenario when data 1 is collected is application scenario 1.

In some embodiments, if the second indication information does not indicate at least one of the second application condition or the second application scenario corresponding to the stored data, fifth indication information may be sent to the network, to indicate at least one of the second application condition or the second application scenario corresponding to the stored data.

In some embodiments, the fifth indication information may be carried by a message such as an RRC setup complete message, an RRC resume complete message, or UE assistance information, but is not limited thereto.

Optionally, when the terminal indicates to the network device that there is unreported data, the terminal may further send an application condition and/or an application scenario corresponding to the data to the network device.

For example, when data not reported by the terminal to the network includes data 1, 2, and 3, application condition 1 corresponding to data 1, application condition 2 and the application scenario 1 corresponding to the data 2, and application scenario 2 corresponding to data 3 may be further reported to the network.

S209b, the terminal 101 deletes the stored data.

In some embodiments, if the third message carries the fourth indication information, the terminal deletes the stored data based on the fourth indication information.

In some embodiments, terms such as "certain", "predetermined", "predefined", "set", "indicated", "some", "any", "first", and the like may be replaced with each other, "certain A", "predetermined A", "predefined A", "set A", "indicated A", "some A", "any A", "first A" may be interpreted as A predetermined in a protocol or the like, or may be interpreted as A acquired by setting, configuring, or indicating, etc. or may be interpreted as certain A, some A, any A, or first A, etc. but is not limited thereto.

In some embodiments, terms "in a case that", "in response to", "when", "upon", "if", "in a case of" etc., may be replaced with each other.

The method involved in the embodiments of the present disclosure may include at least one of the steps S200 to S209b. For example, steps S201 and S202 may be implemented as an independent embodiment; steps S201, S202, and S200 may be implemented as an independent embodiment; steps S201, S202, and S209a may be implemented as an independent embodiment; steps S201, S202, and S203 may be implemented as an independent embodiment; steps S201, S202, S203, S204, and S205 may be implemented as an independent embodiment; steps S201, S202, S203, S204, S205, and S206 may be implemented as an independent embodiment; steps S201, S202, S207 may be implemented as an independent embodiment; steps S201, S202, S207, S209a may be implemented as an independent embodiment; and steps S201, S202, S207, S208, S209b may be implemented as an independent embodiment, which is not limited in the present disclosure.

In some embodiments, step S200 is optional, and one or more of these steps may be omitted or replaced in different embodiments.

In some embodiments, step S203 is optional, and one or more of these steps may be omitted or replaced in different embodiments.

In some embodiments, step S204 is optional, and one or more of these steps may be omitted or replaced in different embodiments.

In some embodiments, step S205 is optional, and one or more of these steps may be omitted or replaced in different embodiments.

In some embodiments, step S206 is optional, and one or more of these steps may be omitted or replaced in different embodiments.

In some embodiments, step S207 is optional, and one or more of these steps may be omitted or replaced in different embodiments.

In some embodiments, step S208 is optional, and one or more of these steps may be omitted or replaced in different embodiments.

In some embodiments, step S209a is optional, and one or more of these steps may be omitted or replaced in different embodiments.

In some embodiments, step S209b is optional, and one or more of these steps may be omitted or replaced in different embodiments.

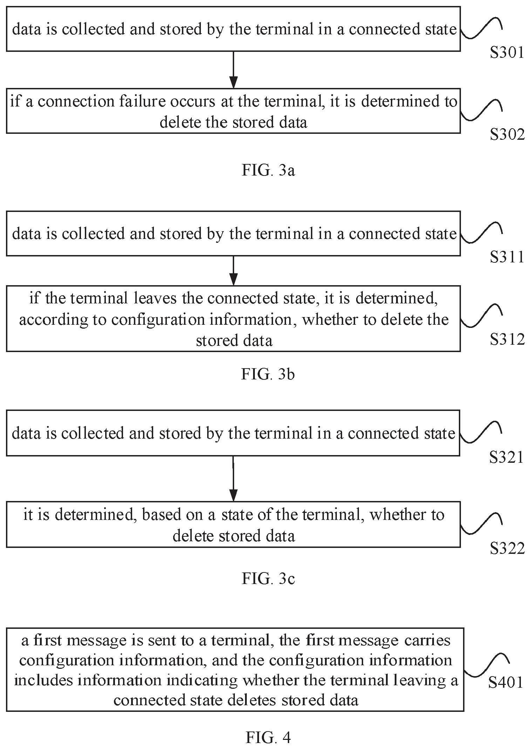

FIG. 3a is a schematic flowchart of a method for data processing according to an embodiment of the present disclosure. As shown in FIG. 3 a, the method for data processing may be performed by the terminal 101, and the method includes the following steps.

S301, data is collected and stored by the terminal in a connected state.

For an optional implementation of step S301, reference may be made to the optional implementations of step S201 of FIG. 2 and other associated parts in the embodiments involved in FIG. 2, and details are not described here again.

In some embodiments, the data is used for training or performance monitoring of an AI model.

S302, if a connection failure occurs at the terminal, it is determined to delete the stored data.

In some embodiments, the connection failure includes at least one of an RRC reestablishment failure, an RRC setup failure, an RRC resume failure, an RRC reconfiguration failure, a handover failure, a radio link failure, etc., but is not limited thereto.

Optionally, when one of the foregoing connection failures occurs, the terminal deletes the stored data.

In some embodiments, the method may include the following step.

S303 (not shown in the figure), if the terminal enters the connected state and the stored data exists, second indication information is sent to a network device.

Optionally, the second indication information indicates that the stored data exists.

For an optional implementation, reference may be made to the optional implementations of step S207 of FIG. 2 and other associated parts in the embodiments involved in FIG. 2, and details are not described here again.

In some embodiments, the method may include the following step.

In S304 (not shown in the figure), a third message sent by the network device is received.

In some embodiments, the third message may carry third indication information for instructing the terminal to report the stored data.

In some embodiments, the third message may carry fourth indication information for instructing the terminal to delete the stored data.

For an optional implementation, reference may be made to the optional implementations of step S208 of FIG. 2 and other associated parts in the embodiments involved in FIG. 2, and details are not described here again.

In some embodiments, the method may include the following step.

S305a (not shown in the figure), the stored data is reported to the network device.

In some embodiments, the terminal entering the connected state may periodically report the stored data to the network device.

In some embodiments, a period of reporting data of the terminal may be preconfigured, or may be acquired from a protocol, which is not limited in the embodiments of the present disclosure.

In some embodiments, the stored data is reported to the network device based on the third indication information.

In some embodiments, if the second indication information does not indicate at least one of a second application condition or a second application scenario corresponding to the stored data, the third indication information further indicates at least one of a first application condition or first application scenario corresponding to data that is required to be reported.

Optionally, the network may instruct the terminal to report which data, and may further instruct the terminal to send an application condition and/or an application scenario corresponding to the data to be reported.

For the foregoing optional implementations, reference may to the optional implementations of step S209a in FIG. 2 and other associated parts in the embodiments involved in FIG. 2. Details are not described here again.

In some embodiments, the method may include the following step.

S305b (not shown in the figure), the stored data is deleted based on the fourth indication information.

For the foregoing optional implementations, reference may be made to the optional implementations of step S209b of FIG. 2 and other associated parts in the embodiments involved in FIG. 2, and details are not described here again.

In some embodiments, the method may include the following step.

S306 (not shown in the figure), fifth indication information is sent to the network device, where the fifth indication information indicates at least one of a second application condition or a second application scenario corresponding to the stored data.

For the foregoing optional implementations, reference may be made to the optional implementations of step S209a in FIG. 2 and other associated parts in the embodiments involved in FIG. 2, and details are not described here again.

The method involved in the embodiments of the present disclosure may include at least one of steps S300 to S306. For example, steps S301 and S302 may be implemented as an independent embodiment; steps S301, S302, and S303 may be implemented as an independent embodiment; steps S301, S302, and S305a may be implemented as an independent embodiment, steps S301, S302, S303, and S304 may be implemented as an independent embodiment; steps S301, S302, S303, S304, and S305a may be implemented as an independent embodiment; steps S301, S302, S307, S305a, and S306 may be implemented as an independent embodiment; and steps S301, S302, S303, and S305b may be implemented as an independent embodiment, which is not limited in the present disclosure.

In some embodiments, step S303 is optional, and one or more of these steps may be omitted or replaced in different embodiments.

In some embodiments, step S304 is optional, and one or more of these steps may be omitted or replaced in different embodiments.

In some embodiments, step S306 is optional, and one or more of these steps may be omitted or replaced in different embodiments.

In some embodiments, step S305a is optional, and one or more of these steps may be omitted or replaced in different embodiments.

In some embodiments, step S305b is optional, and one or more of these steps may be omitted or replaced in different embodiments.

FIG. 3b is a schematic flowchart of a communication method according to an embodiment of the present disclosure. As shown in FIG. 3b, the communication method may be performed by the terminal 101, and the method includes the following steps.

S311, data is collected and stored by the terminal in a connected state.

For an optional implementation of step S311, reference may be made to the optional implementations of step S201 of FIG. 2 and other associated parts in the embodiments involved in FIG. 2, and details are not described here again.

S312, if the terminal leaves the connected state, it is determined, according to configuration information, whether to delete the stored data.

In some embodiments, the configuration information may be specified in a protocol, or may be configured by the network.

For an optional implementation of step S312, reference may be made to the optional implementations of step S202 of FIG. 2 and other associated parts in the embodiments involved in FIG. 2, and details are not described here again.

In some embodiments, before step S312, the method may further include the following step.

S310 (not shown in the figure), a first message is acquired.

In some embodiments, a first message sent by the network device may be received, or a first message sent by another device may be received.

For an optional implementation of step S310, reference may be made to the optional implementations of step S203 of FIG. 2 and other associated parts in the embodiments involved in FIG. 2, and details are not described here again.

In some embodiments, the first message carries the configuration information, for example, carries the configuration information via a system message or an RRC message.

Optionally, the configuration information may include information indicating whether the terminal leaving the connected state deletes the stored data.

In some embodiments, the method may include: if it is determined to continue saving the stored data, the stored data is deleted after a first duration.

For the foregoing optional implementations, reference may be made to the optional implementations of step S200 of FIG. 2 and other associated parts in the embodiments involved in FIG. 2, and details are not described here again.

In some embodiments, the first duration is a duration of a first timer configured by the network device.

In some embodiments, the configuration information may further include information of the first duration of the first timer.

In some embodiments, the method may include the following step.

S313 (not shown in the figure), first indication information sent by the network device is received, where the first indication information indicates that duration of the first timer is a second duration.

S314 (not shown in the figure), the first timer is restarted based on the first indication information.

For the foregoing optional implementations, reference may be made to the optional implementations of steps S204 and S205 of FIG. 2, and other associated parts in the embodiments involved in FIG. 2, and details are not described here again.

In some embodiments, the method may include the following step.

S315 (not shown in the figure), if the state of the terminal changes, a running first timer is stopped.

For the foregoing optional implementations, reference may be made to the optional implementations of step S206 of FIG. 2 and other associated parts in the embodiments involved in FIG. 2, and details are not described here again.

The stored data in the foregoing embodiments is not reported to the network device 102

In some embodiments, the method may include the following step.

S316 (not shown in the figure), if the terminal enters the connected state and the stored data exists, second indication information is sent to the network device.

Optionally, the second indication information indicates that the stored data exists.

For the foregoing optional implementations, reference may be made to the optional implementations of step S207 of FIG. 2 and other associated parts in the embodiments involved in FIG. 2, and details are not described here again.

In some embodiments, the method may include the following step.

S317 (not shown in the figure), a third message sent by the network device is received.

In some embodiments, the third message may carry third indication information for instructing the terminal to report the stored data.

In some embodiments, the third message may carry fourth indication information for instructing the terminal to delete the stored data.

For the foregoing optional implementations, reference may be made to the optional implementations of step S208 of FIG. 2 and other associated parts in the embodiments involved in FIG. 2, and details are not described here again.

In some embodiments, the method may include the following step.

S318a (not shown in the figure), the stored data is reported to the network device.

In some embodiments, the terminal entering the connected state may periodically report the stored data to the network device.

In some embodiments, a period of reporting data of the terminal may be preconfigured, or may be acquired from a protocol, which is not limited in the embodiments of the present disclosure.

In some embodiments, the stored data is reported to the network device based on the third indication information.

In some embodiments, if the second indication information does not indicate at least one of a second application condition or a second application scenario corresponding to the stored data, the third indication information further indicates at least one of a first application condition or first application scenario corresponding to data that is required to be reported.

For the foregoing optional implementations, reference may be made to the optional implementations of step S209a in FIG. 2 and other associated parts in the embodiments involved in FIG. 2, and details are not described here again.

In some embodiments, the method may include the following step.

S318b (not shown in the figure), the stored data is deleted based on the fourth indication information.

For the foregoing optional implementations, reference may be made to the optional implementations of step S209b of FIG. 2 and other associated parts in the embodiments involved in FIG. 2, and details are not described here again.

In some embodiments, the method may include the following step.

S319 (not shown in the figure), fifth indication information is sent to the network device, where the fifth indication information indicates at least one of a second application condition or a second application scenario corresponding to the stored data.

For the foregoing optional implementations, reference may be made to the optional implementations of step S209a in FIG. 2 and other associated parts in the embodiments involved in FIG. 2, and details are not described here again.

The method involved in the embodiments of the present disclosure may include at least one of steps S310 to S319. For example, steps S311 and S312 may be implemented as an independent embodiment; steps S311, S312, and S310 may be implemented as an independent embodiment; steps S311, S312, and S318a may be implemented as an independent embodiment; steps S311, S312, S313, and S314 may be implemented as an independent embodiment; steps S311, S312, S313, S314, and S315 may be implemented as an independent embodiment; steps S311, S312, S313, S314, S315, and S316 may be implemented as an independent embodiment; steps S311, S312, and S317 may be implemented as an independent embodiment; steps S311, S312, S317, and S319 may be implemented as an independent embodiment; steps S311, S312, S317, and S318a may be implemented as an independent embodiment; steps S311, S312, S317, S318a, and S319 may be implemented as an independent embodiment; steps S311, S312, S317, and S318b may be implemented as an independent embodiment; and steps S311, S312, S317, S318b, and S319 may be implemented as an independent embodiment, which is not limited in the present disclosure.

In some embodiments, step S310 is optional, and one or more of these steps may be omitted or replaced in different embodiments.

In some embodiments, step S313 is optional, and one or more of these steps may be omitted or replaced in different embodiments.

In some embodiments, step S314 is optional, and one or more of these steps may be omitted or replaced in different embodiments.

In some embodiments, step S315 is optional, and one or more of these steps may be omitted or replaced in different embodiments.

In some embodiments, step S316 is optional, and one or more of these steps may be omitted or replaced in different embodiments.

In some embodiments, step S317 is optional, and one or more of these steps may be omitted or replaced in different embodiments.

In some embodiments, step S318a is optional, and one or more of these steps may be omitted or replaced in different embodiments.

In some embodiments, step S318b is optional, and one or more of these steps may be omitted or replaced in different embodiments.

In some embodiments, step S319 is optional, and one or more of these steps may be omitted or replaced in different embodiments.

FIG. 3c is a schematic flowchart of a communication method according to an embodiment of the present disclosure. As shown in FIG. 3c, the communication method may be performed by the terminal 101, and the method includes the following steps.

S321, data is collected and stored by the terminal in a connected state.

For an optional implementation of step S321, reference may be made to the optional implementations of step S201 of FIG. 2 and other associated parts in the embodiments involved in FIG. 2, and details are not described here again.

S322, it is determined, based on a state of the terminal, whether to delete stored data.

In some embodiments, if a connection failure occurs at the terminal, it is determined to delete the stored data.

For the foregoing optional implementations, reference may be made to the optional implementations of steps S302-S306 of FIG. 3 an and the other associated parts in the embodiments involved in FIG. 3a, and details are not described here again.

In some embodiments, if the terminal leaves the connected state, it is determined, according to configuration information, whether to delete the stored data.

For an optional implementation of the foregoing optional embodiments, reference may be made to the optional implementations of steps S200, S202-S209b, step S310, S312-S319 of FIG. 2, and other associated parts in the embodiments involved in FIG. 2 and FIG. 3b, and details are not described here again.

FIG. 4 is a schematic flowchart of a communication method according to an embodiment of the present disclosure. As shown in FIG. 4, the method in the embodiments of the present disclosure is executed by the network device 102, and the method includes the following step.

S401, a first message is sent to a terminal.

In some embodiments, the first message carries configuration information, and the configuration information includes information indicating whether the terminal leaving a connected state deletes stored data.

In some embodiments, the stored data is data collected and stored by the terminal in the connected state.

For an optional implementation of step S401, reference may be made to the optional implementations of step S203 of FIG. 2 and other associated parts in the embodiments involved in FIG. 2, and details are not described here again.

In some embodiments, the configuration information further includes information of a first duration of a first timer.

In some embodiments, if the configuration information includes information indicating that the terminal leaving the connected state continues to save the stored data, the method further includes:
sending a second message to the terminal, where the second message carries first indication information, and the first indication information indicates that a duration of the first timer is a second duration.

For an optional implementation of the foregoing optional embodiments, reference may be made to the optional implementations of step S204 of FIG. 2, the optional implementations of step S313 of FIG. 3b, and other associated parts in the embodiments involved in FIG. 2 and FIG. 3b, and details are not described here again.

In some embodiments, the stored data is not sent to the network device.

In some embodiments, if the terminal enters a connected state and the stored data exists, the method further includes:
receiving second indication information sent by the terminal, where the second indication information indicates that the stored data exists.

For an optional implementation of the foregoing optional embodiments, reference may be made to the optional implementations of step S207 of FIG. 2 and other associated parts in the embodiments involved in FIG. 2, and details are not described here again.

In some embodiments, the second indication information further indicates at least one of a second application condition or a second application scenario corresponding to the stored data.

In some embodiments, the method further includes:
sending third indication information to the terminal, where the third indication information is used to instruct the terminal to report the stored data; and
receiving the stored data sent by the terminal.

In some embodiments, the third indication information indicates at least one of a first application condition or a first application scenario corresponding to data reported by the terminal; and
first data in the stored data sent by the terminal is received, where the first data corresponds to at least one of the first application condition or the first application scenario.

For an optional implementation of the foregoing optional embodiments, reference may be made to the optional implementations of steps S208 and S209a of FIG. 2, the optional implementations of step S318a of FIG. 3b, and other associated parts in the embodiments involved in FIG. 2 and FIG. 3b, and details are not described here again.

In some embodiments, the method further includes:
sending fourth indication information to the terminal, where the fourth indication information is used to instruct the terminal to delete the stored data.

For an optional implementation of the foregoing optional embodiments, reference may be made to the optional implementations of steps S208 and S209b of FIG. 2, the optional implementations of step S318b of FIG. 3b, and other associated parts in the embodiments involved in FIG. 2 and FIG. 3b, and details are not described here again.

In some embodiments, the method further includes:
receiving fifth indication information sent by the terminal, where the fifth indication information indicates at least one of a second application condition or a second application scenario corresponding to the stored data.

For an optional implementation of the foregoing optional embodiments, reference may be made to the optional implementations of steps S208 and S209a of FIG. 2, the optional implementations of step S319 of FIG. 3b, and other associated parts in the embodiments involved in FIG. 2 and FIG. 3b, and details are not described here again.

The present disclosure further provides an optional implementation, where a UE in a connected state collects and stores data.

In some embodiments, when the UE leaves the connected state, it is determined, according to a configuration, whether to delete or save the stored data.

Optionally, the configuration may be indicated by the network by using indication information carried in an RRC release message, or specified by the protocol.

Optionally, the stored data is bound to an application condition and/or an application scenario.

Optionally, the data is used for training or performance monitoring of an AI model.

Optionally, the data is not reported to the network.

In some embodiments, when a connection failure occurs at the terminal, the stored data is deleted.

Optionally, the connection failure includes an RRC reestablishment failure, an RRC establishment failure, an RRC resume failure, an RRC reconfiguration failure, a handover failure, a radio link failure, and the like.

In some embodiments, if the UE continues to save the stored data, the timer is started, and when the timer expires, the stored data is deleted.

Optionally, a duration of the timer is configured by the network.

In some embodiments, if the UE receives a new timer configured by the network, the timer is restarted.

In some embodiments, if the state of the UE changes and the timer is running, the timer is stopped running.

Optionally, the change of the state of the UE includes that the UE enters an idle state or enters a connected state.

In some embodiments, when the UE enters the connected state and has the stored data, the UE sends indication information (which may correspond to the above second indication information) to the network.

Optionally, the indication information may include an application condition and/or an application scenario for the stored data.

In some embodiments, indication information (which may correspond to the above third indication information) sent by the network is received, and the stored data is sent to the network.

Optionally, the network may indicate, in the indication information, a required application condition and/or an application scenario, and the UE reports stored data corresponding to the application condition and/or the application scenario.

In some embodiments, when the UE reports data, an application condition and/or an application scenario corresponding to the collected data is indicated, for example, the application condition and/or the application scenario may be indicated via the above fifth indication information.

In some embodiments, indication information (which may correspond to the above fourth indication information) sent by the network is received, and the stored data is deleted.

Embodiments of the present disclosure further provide an apparatus for implementing any one of the foregoing methods, for example, to provide an apparatus, where the apparatus includes units or modules configured to implement steps performed by the terminal in any one of the foregoing methods. For another example, there is further provided another apparatus, including units or modules configured to implement steps performed by the network device (for example, an access network device, a core network function node, a core network device, and the like) in any one of the foregoing methods.

It should be understood that the division of the units or modules in the above apparatus is only a logical functional division. In actual implementation, they may be fully or partially integrated into a physical entity, or they may be physically separated. Furthermore, the units or modules in the apparatus may be implemented in the form of processor calling software: for example, the apparatus includes a processor, the processor is connected to a memory, the memory stores instructions, and the processor calls the instructions stored in the memory to implement any of the above methods or to implement the functions of the units or modules of the above apparatus. The processor is, for example, a general-purpose processor such as a central processing unit (CPU) or a microprocessor, and the memory is either internal to the apparatus or external to the apparatus. Alternatively, the units or modules in the apparatus may be implemented in the form of hardware circuits. The functions of some or all of the units or modules may be achieved through the design of the hardware circuits. The aforementioned hardware circuits may be understood as one or more processors. For example, in one implementation, the aforementioned hardware circuit is an application-specific integrated circuit (ASIC). The functions of some or all of the aforementioned units or modules are achieved through the design of the logical relationships between the components within the circuit. As another example, in another implementation, the aforementioned hardware circuit may be implemented through a programmable logic device (PLD). Taking a field-programmable gate array (FPGA) as an example, it may include a large number of logic gates. The connection relationships between the logic gates are configured through configuration files, thereby achieving the functions of some or all of the aforementioned units or modules. All units or modules of the above apparatuses may be implemented entirely through processor calling software, or entirely through hardware circuits, or partially through processor calling software with the remaining parts implemented through hardware circuits.

All units or modules of the foregoing apparatus may be implemented in the form of software invoked by a processor, or all may be implemented in the form of a hardware circuit, or partially implemented in the form of invoking software by using a processor, and a remaining part is implemented in the form of a hardware circuit. In embodiments of the present disclosure, the processor is a circuit with signal processing capabilities. In one implementation, the processor may be a circuit with instruction read and execute capabilities, such as a central processing unit (CPU), a microprocessor, a graphics processing unit (GPU) (which may be understood as a microprocessor), or a digital signal processor (DSP). In another implementation, the processor may implement certain functions through the logical relationship of hardware circuits. The logical relationship of the aforementioned hardware circuits is fixed or reconfigurable. For example, the processor is a hardware circuit implemented by an application-specific integrated circuit (ASIC) or a programmable logic device (PLD), such as an FPGA. In reconfigurable hardware circuits, the process of the processor loading the configuration document and implementing the hardware circuit configuration may be understood as the process of the processor loading instructions to achieve the functions of some or all of the above units or modules. In addition, the processor may also be hardware circuits designed for artificial intelligence, which may be understood as ASICs, such as Neural Network Processing Units (NPUs), Tensor Processing Units (TPUs), Deep Learning Processing Units (DPUs), and the like.

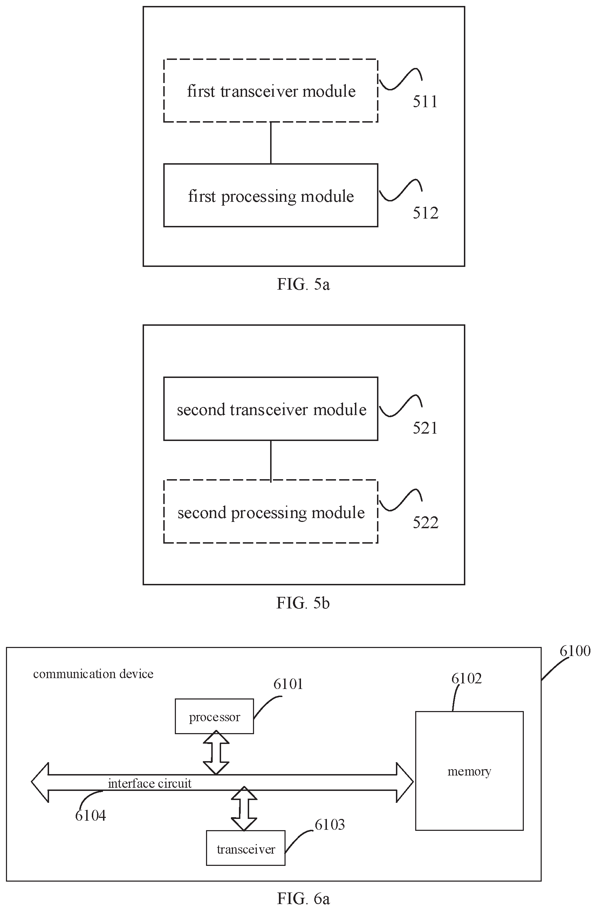

FIG. 5a is a schematic structural diagram of a terminal according to an embodiment of the present disclosure. As shown in FIG. 5a, the terminal may include at least one of a first transceiver module 511, a first processing module 512, or the like.

In some embodiments, the first processing module 512 is configured to collect and store data by the terminal in a connected terminal, and determine, based on a state of the terminal, whether to delete stored data.

Optionally, the first transceiver module 511 is configured to perform steps related to signaling receiving or sending performed by the terminal 101 in any one of the above methods, for example, at least one of steps S203, S204, S207 and S208 shown in FIG. 2, and details are not described here again.

Optionally, the first transceiver module 511 is further configured to perform steps related to communication in any one of the foregoing methods, for example, step S209 shown in FIG. 2, and details are not described here again.

Optionally, the first processing module 512 is configured to perform steps related to data operations performed by the terminal 101 in any one of the foregoing methods, for example, at least one of steps S202 and S209b shown in FIG. 2, and details are not described here again.

Optionally, the first processing module 512 is configured to perform steps related to starting or stopping timer performed by the terminal 101 in any one of the above methods, for example, at least one of steps S205 and S206 shown in FIG. 2, and details are not described here again.

FIG. 5b is a schematic structural diagram of a network device according to an embodiment of the present disclosure. As shown in FIG. 5b, the network device includes at least one of a second transceiver module 521, a second processing module 522, or the like.

In some embodiments, the second transceiver module 521 is configured to send a first message to a terminal, where the first message carries configuration information, and the configuration information includes information indicating whether the terminal leaving a connected state deletes stored data; and
where the stored data is data collected and stored by the terminal in a connected state.

Optionally, the second transceiver module 521 is configured to perform steps related to signaling receiving or sending performed by the network device 102 in any one of the foregoing methods, for example, at least one of steps S203, S204, S207 or S208 shown in FIG. 2, and details are not described here again.

Optionally, the second transceiver module 521 is further configured to perform steps related to communication performed by the network device 102 in any one of the foregoing methods, for example, step S209a shown in FIG. 2, and details are not described here again.

Fig. 6a is a schematic structural diagram of a communication device 6100 provided in an embodiment of the present disclosure. The communication device 6100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 6100 may be used to implement the methods described in the above-mentioned method embodiments, for details, reference may be made to the descriptions in the above-mentioned method embodiments.

As shown in Fig. 6a, the communication device 6100 includes one or more processors 6101. The processor 6101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The processor 6101 is configured to invoke instructions to cause the communication device 6100 to perform any of the above methods.

In some embodiments, the communication device 6100 further includes one or more transceivers 6103. In a case where the communication device 6100 includes one or more transceivers 6103, the transceiver 6103 performs at least one of the communication steps such as sending and/or receiving in the above methods (for example, at least one of step S203, S204, S207, S208, or S209a shown in FIG. 2, which is not limited here), and the processor 6101 performs other steps (for example, at least one of step S201, S202, S205, S206, or S209b shown in FIG. 2, which is not limited here). In optional embodiments, the transceiver may include a receiver and/or a transmitter, which may be separate or integrated. In an implementation, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In some embodiments, the communication device 6100 further includes one or more memories 6102 for storing instructions. In an implementation, all or part of the memory 6102 may be located outside the communication device 6100.

In optional embodiments, the transceiver may include a receiver and a transmitter, which may be separate or integrated. In an implementation, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In an implementation, the communication device 6100 further includes one or more interface circuits 6104, and the interface circuit 6104 is connected with the memory 6102. The interface circuit 6104 may be used to receive signals from the memory 6102 or other devices, and may be used to send signals to the memory 6102 or other devices. For example, the interface circuit 6104 may read instructions stored in the memory 6102 and send the instructions to the processor 6101.

The communication device 6100 described in the above embodiments may be a network device or a terminal, but the scope of the communication device 6100 described in the present disclosure is not limited thereto. The structure of the communication device 6100 may not be limited by FIG. 6a. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

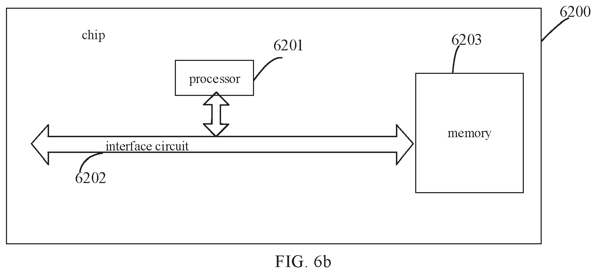

FIG. 6b is a block diagram illustrating a chip 6200 according to embodiments of the present disclosure. In a case where the communication device 6100 may be a chip or a chip system, reference may be made to the block diagram of the chip 6200 shown in FIG. 6b, but it is not limited to thereto.

The chip 6200 includes one or more processors 6201. The chip 6200 is configured to perform any of the above methods.

In some embodiments, the chip 6200 also includes one or more interface circuits 6202. Optionally, terms such as interface circuits, interfaces, and transceiver pins may be replaced with each other. In some embodiments, the chip 6200 further comprises one or more memories 6203 for storing data, all or part of the memory 6203 may be outside the chip 6200. Optionally, the interface circuit 6202 is connected to the memory 6203, and the interface circuit 6202 may be configured to receive data from the memory 6203 or other devices, and the interface circuit 6202 may be used to send data to the memory 6203 or other devices. For example, the interface circuit 6202 may read data stored in the memory 6203 and send that data to the processor 6201.

In some embodiments, the interface circuit 6202 performs at least one of the communication steps such as sending and/or receiving in the above methods (e.g. at least one of steps S203, S204, S207, S208, S209a shown in FIG. 2, but is not limited thereto). The interface circuit 6202 performing the communication steps such as sending and/or receiving in the above methods means that the interface circuit 6202 performs data interaction between the processor 6201, the chip 6200, the memory 6203 or the transceiver device. In some embodiments, the processor 6201 performs at least one of the other steps (e.g. at least one of steps S201, S202, S205, S206, S209b shown in FIG. 2, but not limited thereto).

The present disclosure also provides a program product that, when executed by the communication device 6100, causes the communication device 6100 to perform any of the above methods. Optionally, the program product is a computer program product.

The present disclosure also provides a computer program that, when run on a computer, causes the computer to perform any of the above methods.

The technical solutions described in the embodiments of the present disclosure may be arbitrarily combined without conflict.

The present disclosure further proposes a storage medium on which instructions are stored, which, when executed on the communication device 6100, cause the communication device 6100 to perform any of the above methods. In an implementation, the storage medium is an electronic storage medium. In an implementation, the storage medium is a computer-readable storage medium, but it is not limited to this, and it may also be a storage medium readable by other devices. In an implementation, the storage medium may be a non-transitory storage medium, but it is not limited to this, and it may also be a transitory storage medium.

Other embodiments of the present invention will be apparent to those skilled in the art from consideration of the specification and practice of the invention disclosed herein. The present disclosure is intended to cover any variations, uses, or adaptations of the present disclosure following the general principles of the present disclosure and including common general knowledge or conventional technical means in the art that are not disclosed in the present disclosure. It is intended that the specification and examples be considered as exemplary only, with a true scope and spirit of the invention being indicated by the following claims.

It should be understood that the present disclosure is not limited to the precise structures described above and shown in the accompanying drawings, and various modifications and changes may be made without departing from the scope of the present disclosure. The scope of the invention is limited only by the appended claims.

## Claims

1. A method for data processing, performed by a terminal, comprising:
collecting and storing data by the terminal in a connected state; and
determining, based on a state of the terminal, whether to delete stored data.

2. The method according to claim 1, wherein determining, based on the state of the terminal, whether to delete the stored data comprises:
in response to the terminal leaving the connected state, determining, according to configuration information, whether to delete the stored data.

3. The method according to claim 2, further comprising:
in response to determining to continue saving the stored data, deleting the stored data after a first duration.

4. The method according to claim 3, wherein the first duration is a duration of a first timer configured by a network device.

5. The method according to claim 4, further comprising:
receiving a second message sent by the network device, wherein the second message carries first indication information indicating that the duration of the first timer is a second duration; and
restarting the first timer based on the first indication information.

6. The method according to claim 4 or 5, further comprising:
stopping a running first timer, in response to the state of the terminal changing.

7. The method according to claim 1, wherein determining, based on the state of the terminal, whether to delete the stored data comprises:
in response to occurring a connection failure at the terminal, determining to delete the stored data.

8. The method according to any one of claims 1-7, wherein the stored data is not reported to the network device.

9. The method according to any one of claims 1 to 8, further comprising:
in response to the terminal entering the connected state and the stored data existing, sending second indication information to the network device, wherein the second indication information indicates that the stored data exists.

10. The method according to claim 9, further comprising:
receiving third indication information sent by the network device, wherein the third indication information is used to instruct the terminal to report the stored data; and
sending the stored data to the network device based on the third indication information.

11. The method according to claim 10, wherein the third indication information indicates at least one of a first application condition or a first application scenario corresponding to data reported by the terminal, and
sending the stored data to the network device based on the third indication information comprises:
sending first data in the stored data to the network device, wherein the first data corresponds to at least one of the first application condition or the first application scenario.

12. The method according to claim 9, further comprising:
receiving fourth indication information sent by the network device, wherein the fourth indication information is used to instruct the terminal to delete the stored data; and
deleting the stored data based on the fourth indication information.

13. The method according to any one of claims 9-12, wherein the second indication information further indicates at least one of a second application condition or a second application scenario corresponding to the stored data.

14. The method according to any one of claims 9-12, further comprising:
sending fifth indication information to the network device, wherein the fifth indication information indicates at least one of a second application condition or a second application scenario corresponding to the stored data.

15. A method for data processing, performed by a network device, comprising:
sending a first message to a terminal, wherein the first message carries configuration information, the configuration information comprises information indicating whether the terminal leaving a connected state deletes stored data, and
the stored data is data collected and stored by the terminal in the connected state.

16. The method according to claim 15, wherein the configuration information further comprises information of a first duration of a first timer.

17. The method according to claim 16, wherein in response to the configuration information comprising information indicating that the terminal leaving the connected state continues to save the stored data, the method further comprises:
sending a second message to the terminal, wherein the second message carries first indication information, and the first indication information indicates that a duration of the first timer is a second duration.

18. The method according to any one of claims 15-17, wherein the stored data is not sent to the network device.

19. The method according to any one of claims 15-18, wherein in response to the terminal entering the connected state and the stored data existing, the method further comprises:
receiving second indication information sent by the terminal, wherein the second indication information indicates that the stored data exists.

20. The method according to claim 19, further comprising:
sending third indication information to the terminal, wherein the third indication information is used to instruct the terminal to report the stored data; and
receiving the stored data sent by the terminal.

21. The method according to claim 20, wherein the third indication information indicates at least one of a first application condition or a first application scenario corresponding to data reported by the terminal, and
first data in the stored data sent by the terminal is received, wherein the first data corresponds to at least one of the first application condition or the first application scenario.

22. The method according to claim 19, further comprising:
sending fourth indication information to the terminal, wherein the fourth indication information is used to instruct the terminal to delete the stored data.

23. The method according to any one of claims 19-22, wherein the second indication information further indicates at least one of a second application condition or a second application scenario corresponding to the stored data.

24. The method according to any one of claims 19-22, further comprising:
receiving fifth indication information sent by the terminal, wherein the fifth indication information indicates at least one of a second application condition or a second application scenario corresponding to the stored data.

25. A terminal, comprising:
a first processing module, configured to collect and store data by the terminal in a connected state, and determine, based on a state of the terminal, whether to delete stored data.

26. A network device, comprising:
a second transceiver module, configured to send a first message to a terminal, wherein the first message carries configuration information, and the configuration information comprises information indicating whether the terminal leaving a connected state deletes stored data, and
the stored data is data collected and stored by the terminal in a connected state.

27. A terminal, comprising:
one or more processors;
wherein the terminal is configured to perform the method for data processing according to any one of claims 1 to 14.

28. A network device, comprising:
one or more processors;
wherein the network device is configured to perform the method for data processing according to any one of claims 15 to 24.

29. A communication system, comprising: a terminal and a network device, wherein the terminal is configured to implement the method according to any one of claims 1 to 14, and the network device is configured to implement the method according to any one of claims 15 to 24.

30. A computer-readable storage medium, wherein the computer-readable storage medium stores executable instructions, and the executable instructions are loaded and executed by a processor to implement the method according to any one of claims 1 to 14, or the method according to any one of claims 15 to 24.
